# EUROPEAN PATENT APPLICATION

(11) **EP 4 708 010 A1**
(43) Date of publication of application: **11.03.2026**
(21) Application number: 25198382.1
(22) Date of filing: 27.08.2025
(51) Int. Cl.: G06F 3/04815, G06F 3/04842, G06T 19/00, G06F 30/00, G06F 30/10

(54) **DETERMINING 3D OBJECT-SPACE COORDINATES FROM ENHANCED 2D IMAGES**

(30) Priority: 28.08.2024 US 202418818370
(71) Applicant: The Boeing Company, Arlington, VA 22202 (US)
(72) Inventor: McGarry, William Dwyer, Arlington, VA 22202 (US); Prazak, Nikoli Edward, Arlington, VA 22202 (US); Troy, James J., Arlington, VA 22202 (US); Tskhvaradze, Vladimir, Arlington, VA 22202 (US); Rana, Rohan Jayantilal, Arlington, VA 22202 (US); Meza, Katherine Isabel, Arlington, VA 22202 (US); Heisserman, Jeff Alan, Arlington, VA 22202 (US)
(74) Representative: Hoffmann Eitle

(57) **Abstract**

A method for digital image display and interaction includes receiving an enhanced two-dimensional (2D) image comprising an image dataset derived from a digital object representation that includes spatial data representing a three-dimensional (3D) model of an object. A 2D display image included in the image dataset is displayed that depicts the object from a virtual camera location. User input is received associated with a selected pixel in the 2D display image having image-space coordinates within the enhanced 2D image. Based at least in part on the image-space coordinates of the selected pixel, a depth value for the selected pixel, a model view transformation matrix, and a projection matrix included in the image dataset, 3D object-space coordinates are calculated of a selected point on the object corresponding to the selected pixel. The 3D object-space coordinates of the selected point are displayed.

## Description

### FIELD

The invention generally relates to image rendering techniques, and more particularly, techniques for calculating three-dimensional (3D) coordinates corresponding to a selected pixel of an enhanced two-dimensional (2D) image of an object.

### BACKGROUND

Physical objects can be represented digitally using three-dimensional (3D) spatial data - e.g., taking the form of a digital model that corresponds to the physical object. Furthermore, digital objects can be generated that do not correspond to existing real-world physical objects. Such data may be rendered, viewed, and manipulated by a suitable 3D rendering application.

### SUMMARY

This summary is not an extensive overview of the specification. It is intended to neither identify key or critical elements of the specification nor delineate any scope particular to embodiments of the specification, or any scope of the claims. Its sole purpose is to present some concepts of the specification in a simplified form as a prelude to the more detailed description that is presented in this disclosure.

A method for digital image rendering includes, at a computing device, receiving an enhanced two-dimensional (2D) image comprising an image dataset derived from a digital object representation, the digital object representation including spatial data representing a three-dimensional (3D) model of an object. A 2D display image included in the image dataset is displayed, the 2D display image depicting the object from a virtual camera location. User input is received that is directed at a selected pixel in the 2D display image having image-space coordinates within the enhanced 2D image. Based at least in part on the image-space coordinates of the selected pixel, a depth value for the selected pixel, a model view transformation matrix, and a projection matrix included in the image dataset, 3D object-space coordinates are calculated of a selected point on the object corresponding to the selected pixel. The 3D object-space coordinates of the selected point are displayed.

The features, functions, and advantages that have been discussed can be achieved independently in various embodiments or can be combined in yet other embodiments, further details of which can be seen with reference to the following description and drawings.

### BRIEF DESCRIPTION OF THE DRAWINGS

FIG. 1 schematically depicts different two-dimensional (2D) display images of a three-dimensional (3D) digital object.
FIG. 2 illustrates an example method for enhanced 2D image creation.
FIG. 3 schematically illustrates generating an image dataset based on a digital object representation including spatial data of an object.
FIG. 4 illustrates an example method for digital image display.
FIG. 5 schematically illustrates a client computing device accessing an enhanced 2D image from a server computing device.
FIGS. 6A-C schematically illustrate interacting with an enhanced 2D image and calculating and displaying 3D coordinates corresponding to a selected pixel in a 2D display image.
FIG. 7 schematically depicts a component identity map corresponding to a 2D display image of an object.
FIG. 8 schematically depicts display of a 3D distance between two different points selected in a 2D display image.
FIG. 9 schematically depicts aspects of an example enhanced 2D image file.
FIG. 10 illustrates an example method for displaying metadata of a selected pixel and measuring the 3D object-space distance between selected points.
FIG. 11 schematically shows an example computing system.

### DETAILED DESCRIPTION

In various industries, such as aerospace, automotive, architecture, manufacturing, etc., it may be useful to review three-dimensional (3D) spatial data corresponding to a digital object model. For instance, a 3D object model may be rendered and viewed in a suitable 3D rendering application. However, traditional methods of accessing 3D data often involve complex software setups, significant hardware requirements, and potential security risks associated with transmitting sensitive 3D model data. For instance, current solutions may include the use of 3D visualization applications requiring high-performance hardware, which limits accessibility for users with low-end devices. Additionally, these solutions can be cumbersome due to lengthy loading times and performance degradation as the complexity of the 3D scene increases. These types of 3D visualization systems also require the user to learn to use 3D spatial navigation controls, which may be difficult for some users, especially casual users of the application. Furthermore, other types of existing solutions for deriving 3D data from two-dimensional (2D) images may require use of isometric or axonometric drawings, where the same scale factor is used for each primary axis. Other methods may store 3D coordinate data or metadata for every pixel, using significant amounts of storage.

Accordingly, the present disclosure is directed to methods for deriving 3D information from an enhanced 2D image of a 3D object representation. For instance, a 2D display image of an object may be viewed in a web browser application, or other suitable application for image viewing, which beneficially does not require high-performance hardware. However, upon directing user input at a particular selected pixel on the 2D display image, the computing system may calculate 3D coordinates of a corresponding selected point on the surface of the 3D object. In other words, an alternate form of viewing and interacting with the 3D data is possible using the visualization data created during the initial 3D rendering process, by saving that visualization data is in a form that allows subsequent viewing and interaction (e.g., an "enhanced 2D image"), without the need for a 3D rendering application.

More particularly, according to the present disclosure, an image dataset is generated based on spatial data representing the 3D model of a digital object. The image dataset includes a 2D display image of the object that is rendered from a particular virtual camera location, a depth map, a projection matrix, and a model view transformation matrix derived from the 3D model and virtual camera location. The different components of the image dataset may be collectively referred to as an enhanced 2D image. The model view transformation matrix is the combination of the model transformation matrix used to locate the 3D model in the 3D environment, and the camera view transformation matrix. When user input is directed to a selected pixel in the 2D display image of the enhanced 2D image, having image-space coordinates within the 2D display image (e.g., the pixel's coordinates within the 2D pixel grid of the display image), the associated depth value of the pixel in the depth map, the model view transformation matrix, and the projection matrix may be used to calculate 3D coordinates for a corresponding point on the object's surface. These 3D coordinates may then be displayed for review. In some examples, the image dataset may additionally include other suitable types of information - e.g., metadata pertaining to object-specific information (such as part names, part numbers) associated with the selected object, additional model view transforms (e.g., for alternative coordinate systems), and/or additional images of the object from other locations, etc.

In this manner, the techniques described herein beneficially enable users to access 3D information pertaining to a digital object, even while viewing a 2D image depicting the object. This beneficially alleviates the need for the user to locally render a detailed 3D model using a specialized rendering application. Rather, the enhanced 2D image may be displayed in a light-weight application such as a web browser, or other suitable application for image viewing. Furthermore, the techniques described herein beneficially enable the use of lower-end hardware devices, and can improve data security by alleviating the need to transmit the 3D model over a network to a client computing device for rendering, and reduce the training required for users to use the application.

In some examples, the techniques discussed herein may be used to generate equirectangular images that can be used to form a panoramic display - e.g., viewing a 360 degree representation of a 3D scene. In some examples, the techniques discussed herein can be used to implement a front-end interface to downstream services (e.g., accessible through an application-programming interface) that performs additional operations on 3D coordinates and/or metadata. The techniques discussed herein can beneficially enable 3D data to be calculated for 2D images that have a projection (e.g., foreshortening), such as images produced by 3D visualization applications using projection virtual camera settings, and/or digital photographs taken with a depth camera.

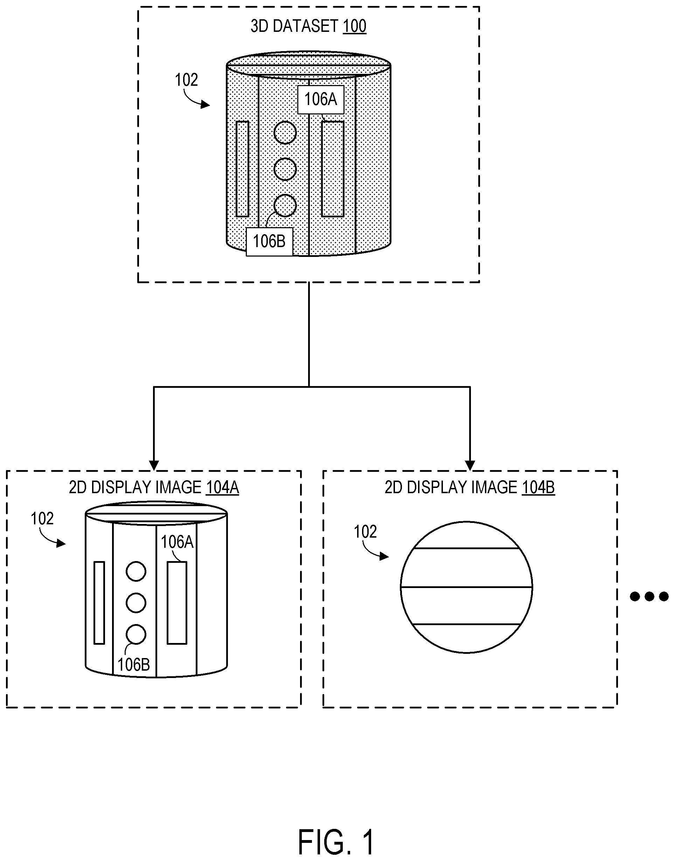

FIG. 1 schematically illustrates the concept of displaying different 2D display images of a 3D digital model. Specifically, FIG. 1 schematically shows a 3D dataset 100 representing a digital model 102. It will be understood that a "3D dataset" or a "3D model" as described herein may include any suitable data pertaining to the 3D model of an object. Such data may be formatted in any suitable way, and may be expressed at any suitable level of detail. In some examples, the 3D dataset represents a digital object that is modeled using a suitable 3D modeling or sculpting application. Additionally, or alternatively, the 3D dataset may correspond to a digital representation of a physical object. For instance, in some examples, the 3D dataset may include, or be derived from, data generated through a 3D scanning operation applied to a physical object in the real-world.

In general, a 3D dataset refers to a digital representation of an object or scene in three dimensions, encompassing width, height, and depth. It may be constructed using vertices, edges, and faces within a coordinate system, allowing for detailed and interactive visualization from any camera viewing location (e.g., including a camera position and orientation within a 3D environment). 3D models are commonly used in applications such as computer-aided design (CAD), virtual reality, gaming, and simulations.

By contrast, 2D images of a 3D model are projections of the 3D model onto a two-dimensional surface. These images capture a single view of the 3D model, akin to a photograph. While they can convey information about the model's appearance from that specific viewpoint, they generally lack the depth and interactive capabilities inherent in the original 3D model. For instance, in general, 2D images are static and cannot be manipulated to show different viewing locations without generating a new image from the 3D model.

It will be understood that the specific shape and appearance of digital object 102 is non-limiting. Instead, the digital object 102 shown in FIG. 1, as well as other figures discussed herein, is intended only to serve as a generic representation of a digital object that can be rendered as a 2D image, for the sake of describing the calculation of 3D coordinates. It will be understood that the techniques described herein may be applied to any of a wide variety of different suitable digital models, which may have any arbitrary size, shape, and purpose.

As will be discussed in more detail below, digital models may in some cases include two or more subcomponents within the overall assembly. In some cases, information relating to a given subcomponent may be displayed when a user selects a particular pixel in a 2D display image that depicts the subcomponent. In the example of FIG. 1, the generic digital object 102 includes various subcomponents, including two rectangular subcomponents (one of which is labeled as subcomponent 106A), and three circular subcomponents (one of which is labeled as subcomponent 106B). It will be understood that, as with the digital object itself, these subcomponents are non-limiting examples, and serve only as generic representations of the types of structures to which the techniques discussed herein can be applied.

In FIG. 1, two different 2D display images 104A and 104B are displayed that depict digital object 102. Each of these 2D images depict the digital model from different virtual camera locations - e.g., akin to photographs taken of a physical object from different angles. These 2D images may take the form of digital images, each including a plurality of pixels arranged in a two-dimensional grid. Thus, any particular position within a 2D image may be defined by a set of image-space pixel coordinates - e.g., an X coordinate and a Y coordinate within the 2D pixel grid.

Similar to the digital objects themselves, it will be understood that a 2D display image included in an enhanced 2D image depicting an object may take any suitable form and have any suitable appearance. For instance, during image rendering, any suitable lighting and/or textures may be applied, affecting the appearance of the digital object within the 2D display image. Notably, 2D display images may be rendered to simulate illumination of the digital object under any suitable lighting conditions (e.g., any suitable intensity, direction, and/or spectrum of illumination light). The appearance of the object in a 2D display image may or may not be similar to how a physical counterpart of the digital object would appear in the real world. For instance, in some examples, a 2D display image may be rendered to have a photorealistic appearance. This may include rendering the 2D display image using with ray-traced lighting effects. In other examples, the 2D display image may be rendered using settings that do not produce a photorealistic result - e.g., using lighting, colors, and/or textures that differ from the actual or hypothetical real-world appearance of a corresponding physical object. In other words, rendering methods that are non-photorealistic may also be used to create the 2D display image, such as false color or hidden-line removed rendering techniques. This may include additional overlay elements, like text or lines that are not selectable, but would show up in the 2D display image as reference information.

Enhanced 2D images may be relatively smaller in terms of memory used and file size than 3D datasets, as they include fewer total bytes of data. This can beneficially make enhanced 2D images easier to transmit over a computer network and store in computer storage, as compared to 3D models. Furthermore, enhanced 2D images may be relatively less resource intensive to render for display, and require less specialized software applications for viewing. However, as a drawback, traditional 2D images generally lack information relating to the 3D model of the object, as discussed above. The techniques discussed herein beneficially enable some of this 3D information to be calculated and displayed while a user is viewing and interacting with an enhanced 2D image.

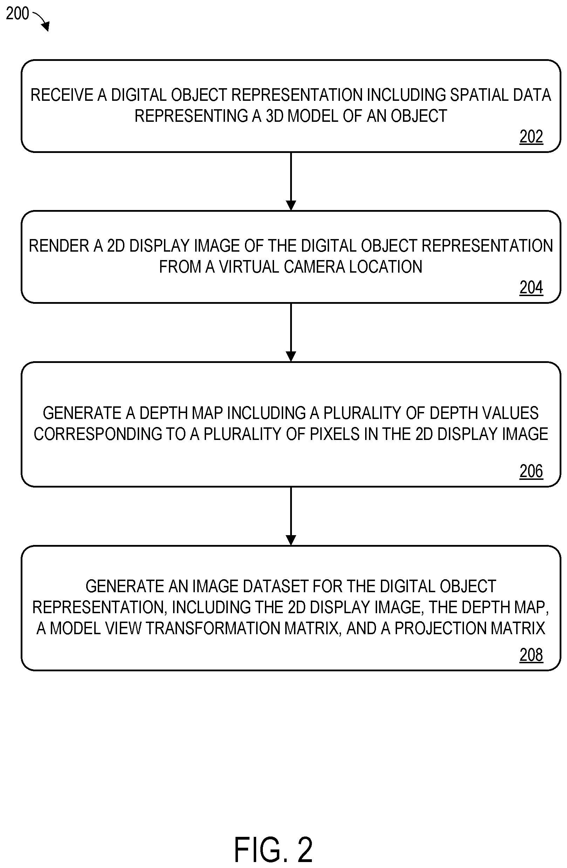

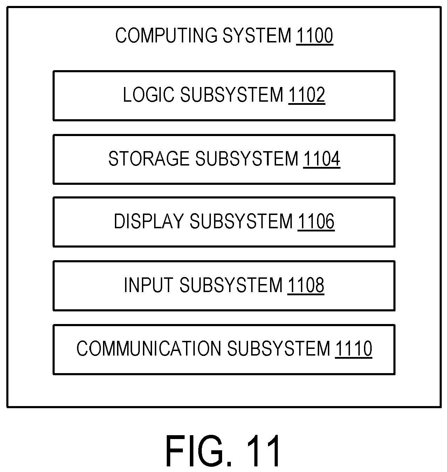

Accordingly, FIG. 2 illustrates an example method 200 for creating enhanced 2D images. Steps of method 200 may be initiated, terminated, and/or repeated at any suitable time, and in response to any suitable condition. Steps of method 200 may be implemented by any suitable computing system of one or more computing devices. Any computing devices implementing steps of method 200 may have any suitable capabilities, hardware configuration, and form factor. In some examples, method 200 may be implemented by computing system 1100 described below with respect to FIG. 11.

At 202, method 200 includes receiving a digital object representation that includes spatial data representing a 3D model of an object. As discussed above with respect to FIG. 1, a dataset of 3D spatial data may be formatted in any suitable way, and may be expressed at any suitable level of detail. In some examples, the 3D dataset represents a digital object that is modeled using a suitable 3D modeling or sculpting application. Additionally, or alternatively, the 3D dataset may correspond to a digital representation of a physical object. For instance, in some examples, the 3D dataset may include, or be derived from, data generated through a 3D scanning operation applied to a physical object in the real-world.

In general, the digital object representation may be "received" in any suitable way, and from any suitable source. In some examples, receiving the digital object representation may include loading the digital object representation from a computer storage device (e.g., integrated storage hardware in the computing device, and/or a removable storage device communicatively coupled with the computing device). In some examples, receiving the digital object representation may include receiving the digital object representation over a computer network from another computing device. Such a computer network may include a local area network, and/or a wide area network such as the internet.

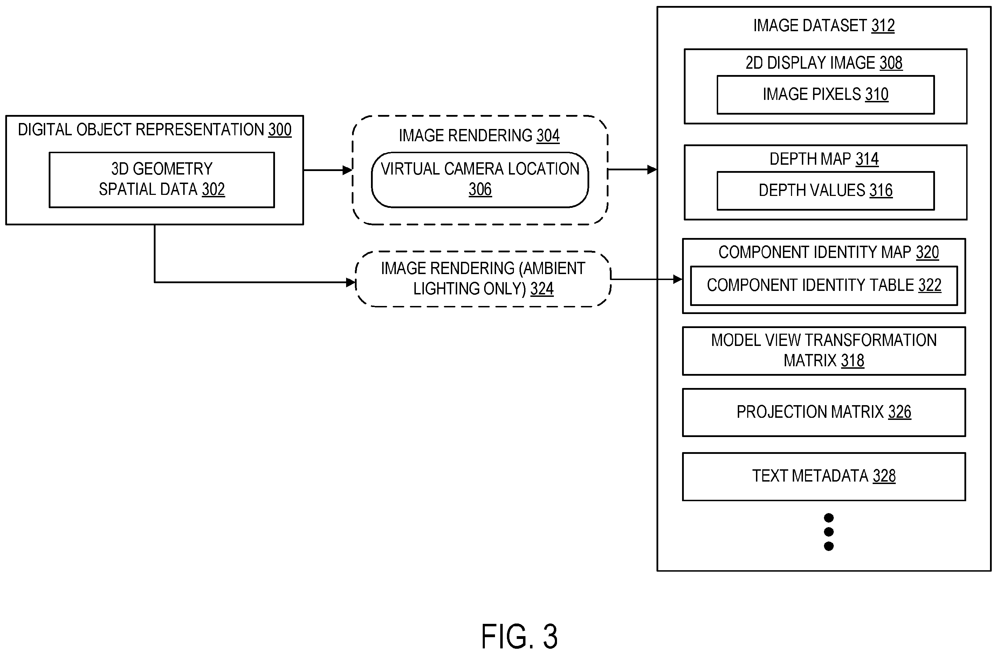

At 204, method 200 includes rendering a 2D display image of the digital object representation from a virtual camera location. As discussed above with respect to FIG. 1, any suitable number of different 2D display images may be generated that depict a given digital object from any of a variety of different virtual camera locations. This process is schematically illustrated with respect to FIG. 3, showing a digital object representation 300 that includes a set of spatial data 302 representing the 3D model of an object. This is input into an image rendering process 304, which generates a 2D display image depicting the digital object from a given virtual camera location 306, resulting in a 2D display image 308. The 2D display image includes a plurality of image pixels 310, which may be arranged in a 2D pixel grid as discussed above.

In general, generating a 2D display image may include first determining the desired virtual camera location from which the digital object should be depicted (e.g., by interacting with a suitable 3D model viewer application), and determining the desired lighting conditions for simulated lighting of the digital object. From there, rendering may include transforming 3D coordinates of the model into 2D coordinates using a projection matrix. One form of this process uses perspective foreshortening to convert the three-dimensional points of the model into a two-dimensional plane, simulating how the human eye perceives depth. Alternatively, orthographic projection is also possible using a different form of the projection matrix that does not involve the use of foreshortening. It will be understood that 2D images may be generated from 3D digital models in any of a variety of suitable ways (e.g., using any of a variety of different graphics rendering pipelines), and that the techniques discussed herein are agnostic as to the specific process used to render 2D images from 3D digital objects.

In the example of FIG. 3, the 2D display image is included in an image dataset 312. As used herein, an "image dataset" includes a 2D display image depicting a digital object from a virtual camera location and projection settings, and also includes additional data useable to calculate 3D coordinates corresponding to a selected pixel in the 2D display image. This collection of data may also be referred to as an enhanced 2D image. Additional examples of data that may be included in an image dataset will be described in more detail below. The different components of an image dataset discussed herein may in some cases be saved together as a single data file. Alternatively, aspects of an image dataset may be distributed between two or more separate data files. As with other datasets described herein, it will be understood that the data included in the image dataset may take any suitable form, and may be expressed and formatted in any suitable way.

Returning briefly to FIG. 2, at 206, method 200 includes generating a depth map including a plurality of depth values corresponding to a plurality of pixels in the 2D display image. In FIG. 3, the image dataset 312 additionally includes a depth map 314 corresponding to the 2D display image 308. The depth map includes a plurality of depth values 316, which correspond to the plurality of image pixels 310 of the 2D display image. In other words, the depth map includes a plurality of values that indicate, for each pixel in the 2D display image, the distance between that portion of the digital object and the position of the virtual camera. Pixels in the 2D display image that depict portions of the digital object having relatively closer positions to the virtual camera are associated with relatively smaller depth values in the depth map. By contrast, pixels in the 2D display image that depict portions of the digital object that are relatively further from the virtual camera are associated with relatively larger depth values.

The depth map may be generated in any suitable way. In general, during rendering of the 3D model, for each pixel in the 2D display image, the rendering engine may calculate the distance from the camera to the surface of the 3D model along the virtual camera's line of sight. This may involve transforming the 3D coordinates of the model into the camera's coordinate system, and determining the depth value for each visible point. The calculated depth values may be stored in a depth buffer, where each entry corresponds to a pixel in the 2D display image. In some cases, the depth values may be normalized to a specific range (e.g., 0 to 1) to facilitate visualization and processing. This step may involve scaling the depth values based on the minimum and maximum depths in the scene. The depth buffer may then be used to generate the depth map, which is included in the image dataset along with the corresponding 2D display image.

Returning briefly to FIG. 2, at 208, method 200 includes generating an image dataset for the digital object representation, the image dataset including the 2D display image, the depth map, a model view transformation matrix, and a projection matrix. In FIG. 3, the image dataset 312 additionally includes model view transformation matrix 318, and projection matrix 326 (which will be described in more detail below). The model view transformation matrix is the combination of the model transformation matrix used to locate (in both position and orientation) the 3D models in the 3D environment, and the camera view transformation matrix, which is used to set the location (position and orientation) of the virtual camera in the 3D virtual environment. The projection matrix defines the corners of the viewing volume (e.g., clip space) that is projected down to 2D space and rasterized into a 2D image. The projection matrix can be a "perspective projection matrix" (when using perspective foreshortening rendering) or an "orthographic projection matrix" (when using orthographic projection rendering). It will be understood that the techniques discussed herein may be applied to both perspective and orthographic projection.

As discussed above, during rendering of the 2D display image, 3D object-space coordinates are transformed into 2D pixel coordinates using a projection matrix, which is derived from various parameters, such as the field-of-view (FOV) of the virtual camera, the aspect ratio (e.g., ratio of width to height of the viewing area), the near clipping plane, and the far clipping plane. These parameters define how the 3D scene is projected onto the 2D view. The projection matrix, and/or information useable to recreate the projection matrix, are stored in the image dataset along with the 2D display image. Thus, as will be described in more detail below, the projection matrix may be inverted to calculate the 3D coordinates corresponding to any given pixel in the 2D display image.

Depending on the implementation, the image dataset may in some cases include additional or alternative types of data to those discussed above - e.g. the 2D display image, model view transformation matrix, projection matrix, and depth map. For instance, as discussed above, the digital object in some cases includes two or more subcomponents. The image dataset may therefore in some cases include a component identity map in which different respective pixel colors are used for pixels depicting the two or more subcomponents. Notably, the component identity map need not be rendered for display, but rather may be a separate image used as a reference for determining which subcomponents are depicted by different image pixels in the 2D display image. In the example of FIG. 3, the image dataset includes a component identity map 320, which itself includes a plurality of component identity values 322. These take the form of pixel values of the component identity map, which may have different values from the image pixels of the 2D display image.

The component identity map may be generated in any suitable way. In some examples, the component identity map may be generated through a second rendering process, in which the lighting conditions are changed relative to the initial image rendering process used to generate the 2D display image. In one non-limiting approach, after generating the 2D display image, the computing system may then assign different unique colors to each different subcomponent (or each different category of subcomponent) in the digital object. Notably, these different unique colors may be different from the colors used to represent the subcomponents in the 2D display image rendered previously, and may be different from the actual appearance of any corresponding real-world physical object. Next, the computing system may render a second 2D image that depicts the digital object with individual subcomponents assigned different unique colors, and then rendered with only the ambient lighting rendering mode enabled (e.g., disabling diffuse, specular, and emitted lighting modes, as well as textures, shadows, etc.). This may result in an image in which the pixels depicting a given subcomponent each have the same color value, and different color values are used for each different subcomponent. For instance, each pixel depicting a first subcomponent may have the same red color value, each pixel depicting a second subcomponent may have the same blue color value, and so on. The second 2D image need not be displayed for viewing, but rather may be used to create a component identity map, where each unique color may be associated with an index value stored in the component identity map.

In some cases, the component identity map may also be associated with a component identity table that lists an identifier of each different subcomponent, and the color value (or index value) that is uniquely associated with that subcomponent in the component identity map. Thus, upon receiving user input directed at a selected pixel, the computing system may reference the component identity map to determine the color value used for a corresponding pixel in the component identity map, and then reference the component identity table to determine the identifier for the subcomponent associated with that color value. Such a component identity table may in some cases include any suitable information in addition to color values and subcomponent identifiers. In other words, the component identity map is useable to resolve each pixel of the 2D display image to a specific subcomponent of the object.

As discussed above, the image dataset includes a model view transformation matrix used in rendering the 2D display image from the 3D digital object. However, in some cases, the image dataset may include more than one model view transformation matrix for the same 2D display image. For instance, in FIG. 3, image dataset 312 additionally includes a second model view transformation matrix 326 that also corresponds to the 2D display image 308. This may, for instance, correspond to a second coordinate system. In one non-limiting example, the digital object represents a component of an aircraft. The first model view transformation matrix may enable calculation of 3D coordinates for a selected pixel in the 2D display image based on a first coordinate system - e.g., defined relative to the entire aircraft. However, some subsystems of the aircraft may have their own respective coordinate systems that are sometimes used - e.g., in assembly instructions, repair instructions, design documents, and/or other documentation. Thus, a second model view transformation matrix may be useable to calculate an alternate set of 3D coordinates for the same pixel in the 2D display image, defined relative to an alternate coordinate system, such as a coordinate system that is specific to a wing of the aircraft. It will be understood that this example is non-limiting, and that multiple coordinate systems may be used for digital objects in other fields besides aerospace. Furthermore, the image dataset may include any suitable number of one or more different model view transformation matrices, corresponding to any suitable number of one or more different coordinate systems. Optionally, different measurement units may also be supported by including one or more optional scaling factors in the image dataset used to multiply the translational elements of the model view matrix in order to achieve different measurement units (e.g., inches, feet, meters, etc.).

Furthermore, in the example of FIG. 3, the image dataset includes text metadata 328. This may take any suitable form, and may include any arbitrary text that corresponds to the digital object. In this manner, as will be discussed in more detail below, when a particular pixel in the 2D image is selected, the computing system may retrieve corresponding metadata associated with the digital object. This may include, for instance, a text description of the selected component, repair instructions, assembly instructions, personal notes, contact information, hyperlinks, and/or any other suitable data. In some cases, a hyperlink included in text metadata may enable information to be passed to an application programming interface (API) - e.g., configured to receive 3D coordinates associated with a selected pixel in the 2D display image, and then perform downstream operations on the 3D coordinates. Nonetheless, selection of different objects can be associated with different types of text metadata, which can be displayed when pixels depicting those objects are selected in an enhanced 2D image.

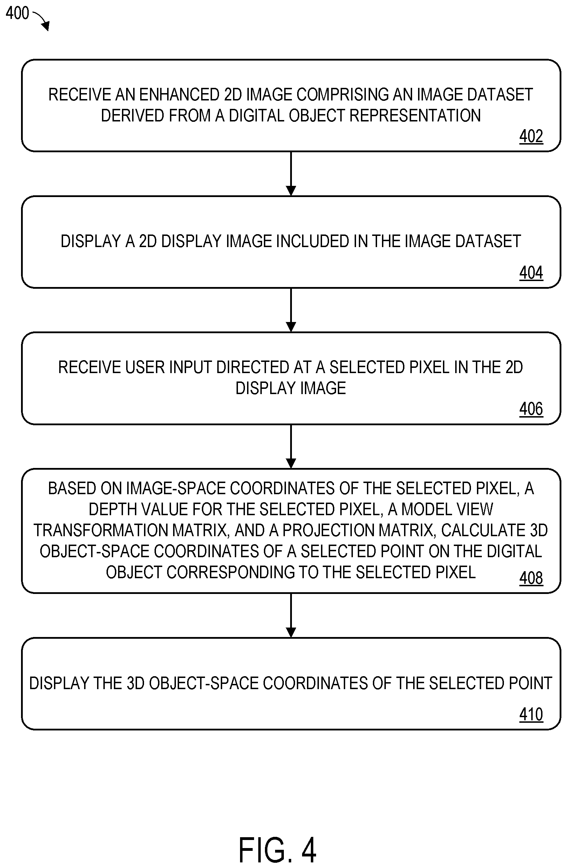

The present disclosure has thus far focused on generating an image dataset from a digital object representation that includes 3D data. Turning now to FIG. 4, another example method 400 for image display will be described, focusing on user-side interaction with an enhanced 2D image that is generated as discussed above. As with method 200, steps of method 400 may be initiated, terminated, and/or repeated at any suitable time, and in response to any suitable condition. Steps of method 400 may be implemented by any suitable computing system of one or more computing devices. Any computing devices implementing steps of method 400 may have any suitable capabilities, hardware configuration, and form factor. In some examples, method 400 may be implemented by computing system 1100 described below with respect to FIG. 11.

At 402, method 400 includes receiving an image dataset derived from a digital object representation. As discussed above, the digital object representation includes spatial data representing the 3D model of a digital object. The image dataset includes a 2D display image depicting the digital object from a virtual camera location, a depth map including a plurality of depth values, along with a model view transformation matrix and a projection matrix, which are used in rendering the 2D display image. In addition, as discussed above, the image dataset may include various other types of data, such as a component identity map in which different respective pixel colors are used for pixels depicting two or more subcomponents in the digital object; a component identity table; one or more additional model view transformation matrices for alternative coordinate systems; text metadata; etc.

Similarly, as discussed above, the image dataset may be received in any suitable way, from any suitable source. For instance, receiving the image dataset may include loading the image dataset from computer storage, such as an integrated storage device or a removable storage device. Additionally, or alternatively, in some examples, the image dataset may be received over a computer network. For example, the computing device implementing method 400 may be a client computing device, and the image dataset may be received from a server computing device via a computer network. The client computing device may in some cases use a web browser, and/or other suitable software application, to access and view the 2D display image of the image dataset.

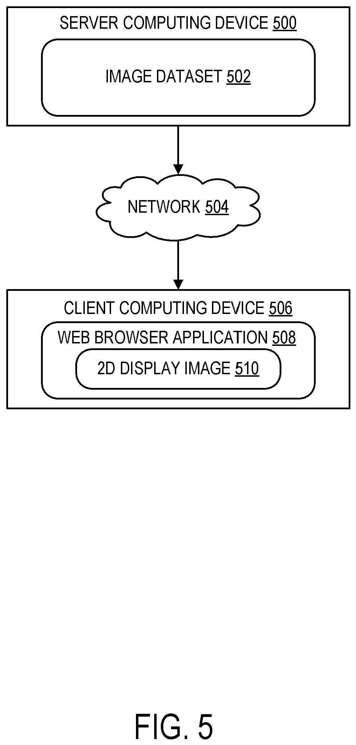

This scenario is schematically illustrated in FIG. 5, showing an example server computing device 500. The server computing device is storing an image dataset 502, which is generated based on a 3D digital model as discussed above. The server computing device is communicatively coupled with a computer network 504, over which a client computing device 506 accesses the image dataset from the server computing device. In other words, in FIG. 5, the client computing device receives the image dataset from the server computing device via a computer network 504. The client computing device is executing a web browser application 508, which is used to display a 2D display image 510 of the digital object for viewing by a user. It will be understood that the server computing device and client computing device may each take any suitable form. In some examples, the server computing device and/or client computing device may be implemented as computing system 1100 described below with respect to FIG. 11. The server computing device may include a workstation computer, laptop computer, rack-mounted server, or any computing device capable of rendering 3D models. The client computing device may include a workstation computer, laptop computer, tablet computer, smartphone, smart watch, smart TV, embedded microprocessor-based computer, or other computer with the ability to display data and accept user inputs, as non-limiting examples.

Returning briefly to FIG. 4, at 404, method 400 includes displaying a 2D display image included in the image dataset, the 2D display image depicting the digital object from a virtual camera location. At 406, method 400 includes receiving user input directed at a selected pixel in the 2D display image having image-space coordinates within the 2D display image. The 2D display image may be displayed in any suitable way, using any suitable computer display technology. Similarly, the user input may be detected using any suitable modality for providing user input to a computing device. For instance, the user input may be provided using a computer mouse, keyboard, touch screen, gesture interface, eye-tracking system, etc.

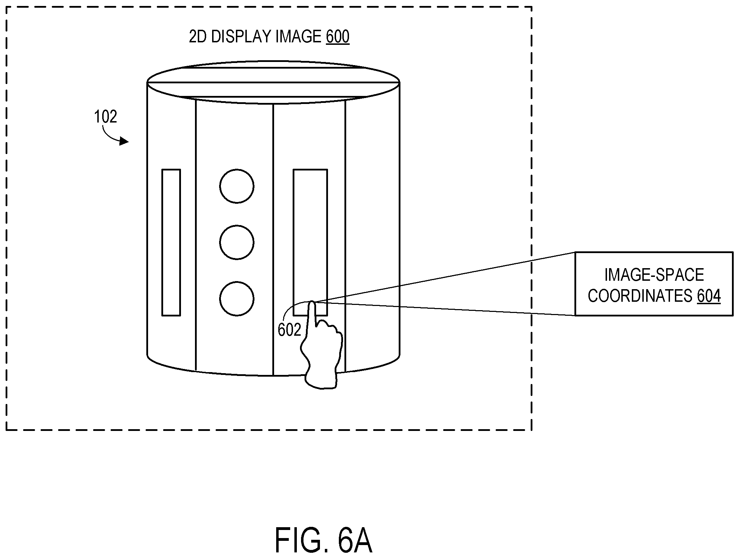

FIG. 6A schematically shows an example 2D display image 600 that depicts digital object 102 of FIG. 1. The 2D display image is generated based on a digital object representation that includes 3D spatial data for the digital object, as discussed above. 2D display image 600 is displayed using a suitable computer display, and a user has provided user input 602 to a particular position within the 2D pixel grid of the 2D display image. In this manner, the user has provided user input to select a particular pixel, or group of two or more pixels, within 2D display image 600. Each pixel in the image is associated with a different set of image-space pixel coordinates within the 2D pixel grid. Thus, in FIG. 6A, the selected pixel is associated with image-space coordinates 604.

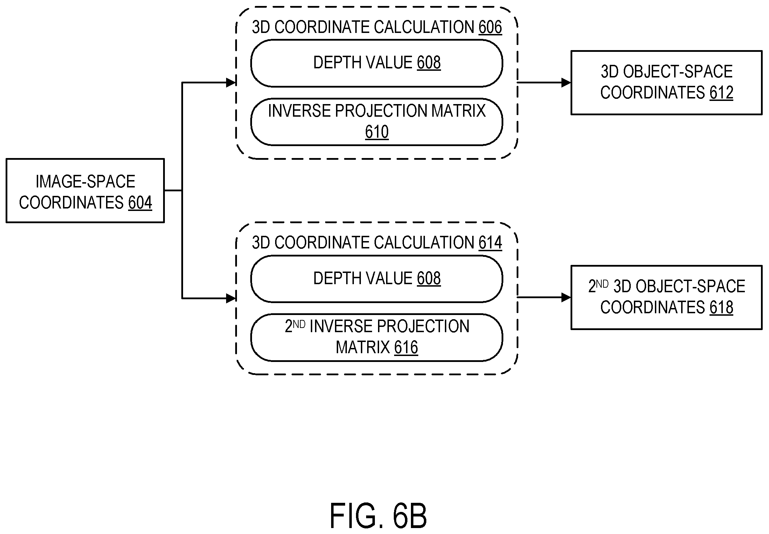

Returning briefly to FIG. 4, at 408, method 400 includes, based at least in part on the image-space coordinates of the selected pixel, a depth value corresponding to the selected pixel in a depth map, a model view transformation matrix, and a projection matrix included in the image dataset, calculating 3D object-space coordinates of a selected point on the object corresponding to the selected pixel. This is schematically illustrated with respect to FIG. 6B, again showing image-space coordinates 604, which are input to a 3D coordinate calculation process 606. This uses a depth value 608 corresponding to the selected pixel, and an inverse projection matrix 610 that is derived from the projection matrix and the model view transformation matrix, to give 3D object-space coordinates 612 of a selected point on the surface of the digital object that corresponds to the selected pixel.

As discussed above, in some examples, the image dataset may include two or more different model view transformation matrices and projection matrices, corresponding to different coordinate systems. This is the case in FIG. 6B, where image-space coordinates 604 are also input to a second 3D coordinate calculation process 614, which uses the depth value 608 and a second inverse projection matrix 616 (e.g., inverted from a second projection matrix and a second model view transformation matrix used in 2D display image rendering), to give a second set of 3D object-space coordinates 618. In other words, the computing system calculates second 3D coordinates corresponding to the same second point on the object, relative to a second coordinate system and using a second inverse projection matrix. For instance, the first set of coordinates 612 may be defined relative to an entire aircraft, while the second set of coordinates 618 may be defined relative to a wing of the aircraft, as non-limiting examples.

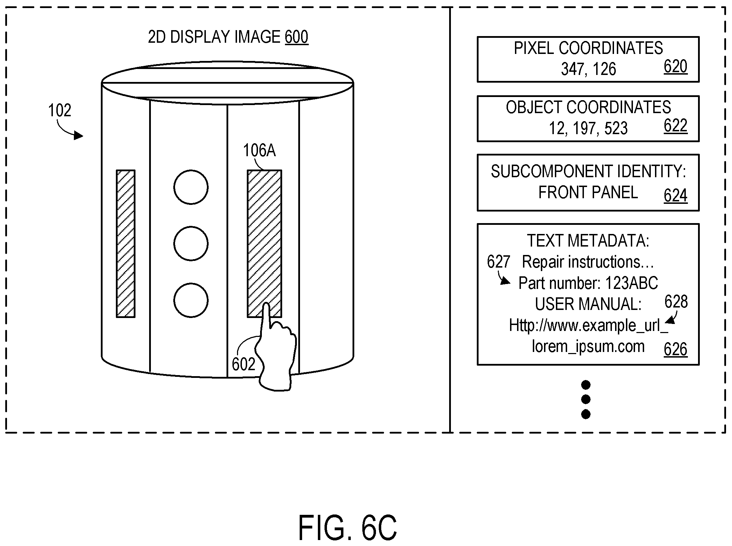

Returning briefly to FIG. 4, at 410, method 400 includes displaying the 3D object-space coordinates of the selected point. This is schematically illustrated with respect to FIG. 6C, again showing the 2D display image 600 of the enhanced 2D image. Based on the user input 602, the computing system is now displaying various types of information about the selected pixel. In this example, this includes the 2D image-space coordinates 620 of the pixel, along with the 3D object-space coordinates 622 of the selected point on the object's surface. It will be understood that the manner in which information is displayed in FIG. 6C, along with the specific content of the information, is non-limiting and used only for the sake of explanation. For instance, the specific numbers used for the 2D image-space coordinates and 3D object-space coordinates are chosen arbitrarily and are only used as non-limiting examples.

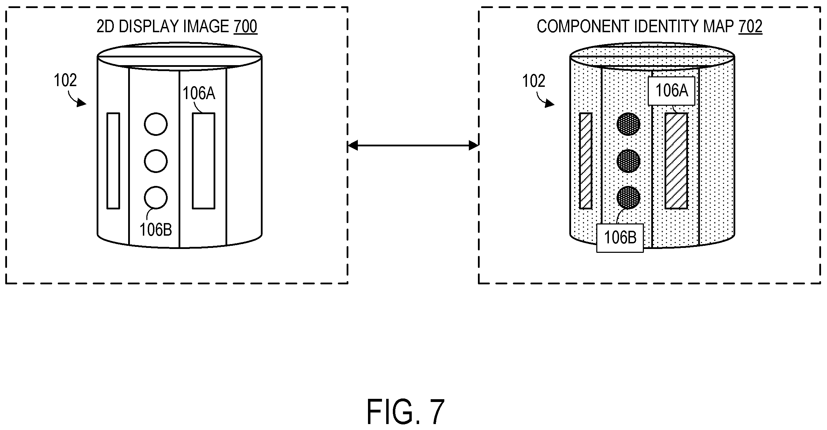

As discussed above, in some examples, the digital object includes two or more different subcomponents. Upon selecting a pixel depicting a particular subcomponent, the computing system may display information specific to that subcomponent. This is the case in FIG. 6C, in which the user input 602 is directed to a pixel depicting rectangular subcomponent 106A. The identity of the subcomponent may be determined based at least in part on a component identity map, as will be described below with respect to FIG. 7. After determining the selected subcomponent that is represented by the selected pixel to which the user input is directed, the computing system displays a corresponding identifier 624 of the selected subcomponent (e.g., Front Panel, in this non-limiting example).

Furthermore, in some cases, the appearance of the selected subcomponent in the 2D display image may be changed after selection. In other words, after determining the selected subcomponent, the computing system may change pixel values of each pixel in the 2D display image depicting the selected subcomponent, to thereby highlight the selected subcomponent within the 2D display image. This is the case in FIG. 6C, in which selection of the subcomponent 106A has caused the computing system to change the pixel values used to represent the subcomponent (e.g., as compared to the appearance of digital object 102 in FIG. 1). As one approach, the highlighting effect may be produced by using the selected region of the component identity map to generate a mask that is blended with the 2D display image, thereby changing the colors of the pixels depicting the selected subcomponent.

In this example, the pixel values of the other rectangular subcomponent are also changed. In other words, selection of subcomponent 106A has caused highlighting of every subcomponent having the same type. In other examples, selecting a particular subcomponent may only cause highlighting of that specific subcomponent, without changing the appearance of other subcomponents of the same type. In some examples, this may be a user-adjustable setting - e.g., whether subcomponent selection highlights only the selected instance, or all instances of the same type.

Additionally, in FIG. 6C, selection of the selected pixel also causes the computing system to display text metadata 626 associated with the selected object. As discussed above, such text metadata may include any arbitrary text data, used to express any suitable information. In the non-limiting example of FIG. 6C, the object represents an aircraft part, and after the user input is received, the system displays part-specific information relating to the aircraft part. This includes a part identifier 627. Additionally, in FIG. 6C, the text metadata includes repair instructions, along with a hyperlink 628 associated with a user manual.

FIG. 7 schematically illustrates a component identity map that corresponds to an enhanced 2D image. It will be understood that a "component identity map" as described herein need not (and typically will not) be displayed for viewing. Rather, it takes the form of a data structure that may be referenced in order to determine the subcomponent corresponding to a particular selected pixel in a 2D display image. Specifically, FIG. 7 includes another example 2D display image 700 that again depicts digital object 102, including subcomponents 106A and 106B. Additionally, FIG. 7 shows a visual representation of a component identity map 702 (which need not be displayed to the user) corresponding to 2D display image 700. As discussed above, in the component identity map, different respective pixel colors are used for pixels depicting the two or more subcomponents. For instance, the rectangular subcomponent instances (e.g., including subcomponent 106A) use a first fill pattern in FIG. 7, while the circular subcomponent instances (e.g., including subcomponent 106B) use a second, different fill pattern in FIG. 7. Notably, the component identity map need not be rendered for display, but rather may be a separate representation of the data used as a reference for determining which subcomponents are depicted by highlighted image pixels in the 2D display image. For instance, as discussed above, selection of a particular pixel in the 2D display image may cause the computing system to identify the color value (or index value) used for a corresponding pixel in the component identity map. Based on that color value (or index value), along with a component identity table, the computing system may determine the identity of the subcomponent depicted by the selected pixel.

The present disclosure has thus far focused primarily on selection of a single pixel in the 2D display image, corresponding to a single selected point on the object's surface. However, in some examples, two or more different pixels may be selected, corresponding to two or more points on the object, or points on two separate objects in the 3D environment. The techniques described herein may beneficially enable calculation and display of information relating to the 3D relationship between the two selected points. In other words, in some examples, the computing system may receive a second user input directed at a second selected pixel in the 2D display image, calculate second 3D object-space coordinates of a second selected point on the object corresponding to the second selected pixel, and display the second 3D object-space coordinates of the second selected point. The computing system may then, in some cases, calculate a 3D object-space distance between the first selected point and the second selected point, and display the calculated 3D object-space distance. Any suitable technique may be used for calculating the 3D object-space distance. As one non-limiting example, the 3D object-space distance may be calculating using the Euclidean norm - e.g., the square root of the sum of the squares of the differences between the individual 3D coordinate components.

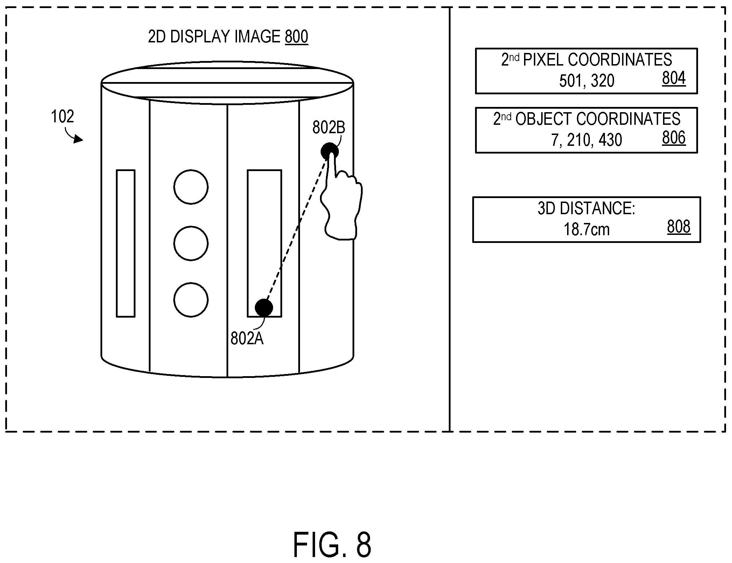

This is schematically illustrated with respect to FIG. 8, showing another example 2D display image 800 of digital object 102. In this example, user input has previously been provided to select a first selected pixel 802A. User input is now provided to select a second selected pixel 802B. The computing system is displaying the 2D pixel coordinates 804 of the second selected pixel, as well as calculated 3D object-space coordinates 806 of the second selected point on the object depicted by the second selected pixel. Additionally, the computing system is displaying a calculated 3D distance 808 between the two selected points on the object's surface. It will be understood that this may be repeated any suitable number of times, for any suitable number of selected pixels.

The present disclosure has thus far focused primarily on conversion of 2D image-space coordinates into 3D object-space coordinates. However, it will be understood that, in some scenarios, it may be desirable to reverse this process. For instance, a user may supply a set of 3D object-space coordinates corresponding to a particular point on the object's surface. The computing system may then use the techniques discussed herein (e.g., calculation based on a projection matrix) to give a set of 2D image-space coordinates in a 2D display image from input 3D coordinates defined in object-space. In some examples, the pixel in the 2D display image depicting the user's supplied 3D coordinates may be highlighted, or otherwise indicated. In some examples, this can facilitate collaborative viewing sessions for multiple simultaneous users. For instance, a first user may select a pixel in their own enhanced 2D image, for which 3D object-space coordinates are calculated. Based on these calculated 3D coordinates, the system may calculate the corresponding 2D image-space coordinates in a second user's enhanced 2D image, which may have a different camera location from the first user's enhanced 2D image. This can enable either user to select a given pixel in their own enhanced 2D image, causing a corresponding pixel to be highlighted in the other user's enhanced 2D image.

Furthermore, in some examples, the techniques discussed herein may be usable to generate equirectangular images for a panoramic display. In one example approach, the computing system may generate a plurality of vertical slices that are 1-pixel wide, each including scene color, depth, and component identity information. These strips may be assembled into some number of equirectangular images (e.g., 3), which can be displayed in a panoramic format. At run-time, the system may identify a 2D image coordinate for a selected point (e.g., determined based on an eye-tracking system), provide an offset based on the panoramic camera view, then process the 2D image coordinates according to the process discussed above to give corresponding 3D coordinates in the surrounding scene. This may beneficially enable users to acquire 3D coordinates, measurements, and/or part information from 360-degree panoramic views, without the complexity of locally-rendering 3D models, and without compromising data security by exporting 3D models to client computing devices.

Furthermore, the present disclosure has thus far focused on scenarios where any given pixel in a 2D display image can be converted into corresponding 3D coordinates in object-space. However, it will be understood that an enhanced 2D image may in some cases include one or more pixels that are non-selectable. Such images may, for instance, include overlay information or annotations applied to the enhanced 2D image, that do not represent corresponding points on the surface of the digital object model.

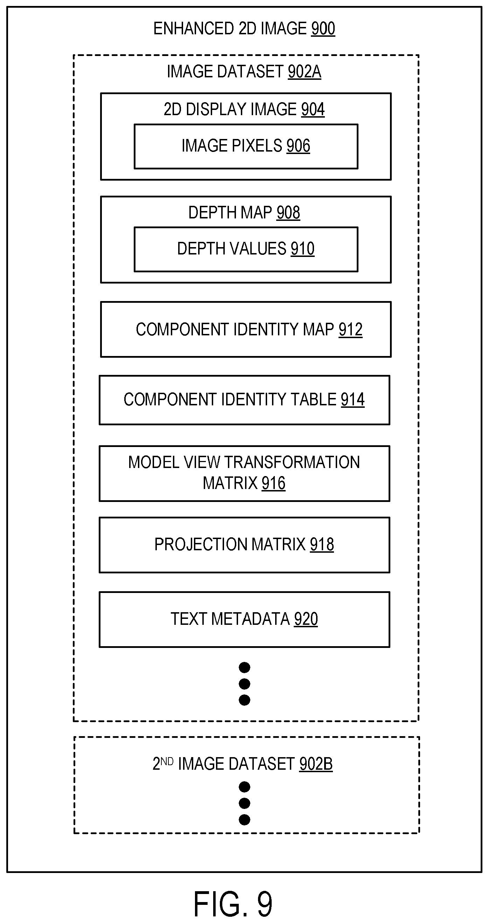

FIG. 9 schematically represents an example enhanced 2D image 900. The enhanced 2D image comprises an image dataset 902A including a 2D display image 904, which depicts an object from a particular camera location, as discussed above. The 2D display image includes a plurality of image pixels 906, forming a 2D grid of pixels each having different image-space coordinates. The image dataset additionally includes a depth map 908, which includes a plurality of depth values 910. The plurality of depth values correspond to the plurality of image pixels 906 of the 2D display image, such that the image dataset includes depth values for at least some pixels of the 2D display image.

In FIG. 9, the image dataset 902A additionally includes a component identity map 912. As discussed above, this may be created as a second 2D image of the object in which individual subcomponents are assigned different unique colors, and then rendered with only ambient lighting effects enabled. Pixels depicting the same subcomponent in the component identity map may each use the same color value (or index value), and different color values (or index values) may be associated with different subcomponents. The image dataset additionally includes a component identity table 914, which associates different color values (or index values) with different subcomponent identifiers. In this manner, after receiving user input directed at a selected pixel in the 2D display image, the color value (or index value) of a corresponding pixel in the component identity map may be determined, and the component identity table may be used to determine the identity of the subcomponent depicted by the selected pixel.

In FIG. 9, image dataset 902A additionally includes a model view transformation matrix 916 and a projection matrix 918. The model view transformation matrix is the combination of the model transformation matrix used to locate the 3D model in the 3D environment, and the camera view transformation matrix. The projection matrix is used in transforming 3D coordinates of the model into 2D coordinates during creation of the 2D display image. Based on the image-space coordinates of the selected pixel, the depth value associated with the selected pixel, the model view transformation matrix, and the projection matrix, the computing system can calculate 3D object-space coordinates of a selected point on the object corresponding to the selected pixel in the 2D display image. Additionally, in this example, the image dataset includes text metadata 920, which may include any suitable text information relating to the object.

Additionally, in this example, the enhanced 2D image 900 includes a second image dataset 902B. This may include any or all of the components discussed above with respect to first image dataset 902A. For instance, the second image dataset may include another 2D display image of the object - e.g., depicting the objects in the 3D environment from a different camera location, or different objects being depicted from the same camera location. The second image dataset may similarly include a depth map, model view transformation matrix, and projection matrix associated with the second 2D display image. Furthermore, the enhanced 2D image may include any suitable number of one or more image datasets, each of which may include a different 2D display image and other suitable data for calculating 3D coordinates corresponding to selected pixels in the 2D display images.

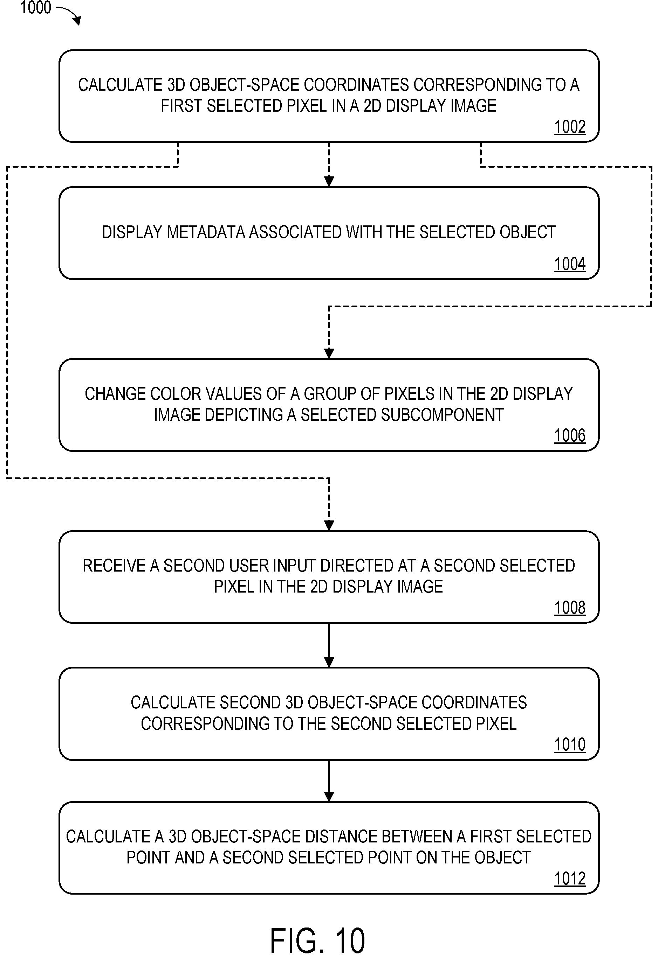

FIG. 10 illustrates an example method 1000 for interaction with an enhanced 2D image. As with the other methods discussed above, steps of method 1000 may be initiated, terminated, and/or repeated at any suitable time, and in response to any suitable condition. Steps of method 1000 may be implemented by any suitable computing system of one or more computing devices. Any computing devices implementing steps of method 1000 may have any suitable capabilities, hardware configuration, and form factor. In some examples, method 1000 may be implemented by computing system 1100 described below with respect to FIG. 11.

Specifically, method 1000 focuses on optional features that may be implemented in addition to the calculating of 3D object-space coordinates as discussed above. To this end, at 1002, method 1000 includes calculating 3D object-space coordinates corresponding to a first selected pixel in a 2D display image of an enhanced 2D image. This may be done substantially as discussed above.

From 1002, method 1000 may proceed to any or all of steps 1004 (e.g., displaying metadata), 1006 (e.g., changing color values), 1008 (e.g., receiving a second user input). At 1004, method 1000 optionally includes displaying metadata associated with the selected object. For instance, this may include text metadata, including the part number of an aircraft part represented by the object, as one non-limiting example.

At 1006, method 1000 additionally or alternatively includes changing color values of a group of pixels in the 2D display image depicting a selected subcomponent depicted by the first selected pixel. As discussed above with respect to FIG. 6C, this may be done by referencing a component identity map and component identity table to determine which subcomponent is depicted by the first selected pixel, and then using the component identity map to generate a mask that can be combined with the 2D display image to change the appearance of the selected subcomponent - e.g., thereby highlighting the subcomponent within the 2D display image. In this manner, metadata may be displayed for the entire object when any point on the object is selected. Furthermore, pixels depicting a particular selected subcomponent of the object may be highlighted to emphasize that subcomponent in particular.

At 1008, method 1000 additionally or alternatively includes receiving a second user input directed at a second selected pixel in the 2D display image. Based on the second selected pixel, the computing system may calculate 3D object-space coordinates of a second selected point on the object corresponding to the second selected pixel. From there, at 1010, method 1000 optionally includes calculating second 3D object-space coordinates corresponding to the second selected pixel. This may be done substantially as discussed above with respect to the first selected pixel - e.g., based on the image-space coordinates of the second selected pixel in the 2D display image, the depth map, the model view transformation matrix, and the projection matrix. At 1012, method 1000 optionally includes calculating the 3D object-space distance between the first selected point and the second selected point on the object. This may be done substantially as discussed above with respect to FIG. 8.

The methods and processes described herein may be tied to a computing system of one or more computing devices. In particular, such methods and processes may be implemented as an executable computer-application program, a network-accessible computing service, an application-programming interface (API), a library, or a combination of the above and/or other compute resources.

FIG. 11 schematically shows a simplified representation of a computing system 1100 configured to provide any to all of the compute functionality described herein. Computing system 1100 may take the form of one or more network-accessible devices, personal computers, server computers, mobile computing devices, and/or other computing devices.

Computing system 1100 includes a logic subsystem 1102 and a storage subsystem 1104. Computing system 1100 may optionally include a display subsystem 1106, input subsystem 1108, communication subsystem 1110, and/or other subsystems not shown in FIG. 11.

Logic subsystem 1102 includes one or more physical devices configured to execute instructions. For example, the logic subsystem may be configured to execute instructions that are part of one or more applications, services, or other logical constructs. The logic subsystem may include one or more hardware processors configured to execute software instructions. Additionally, or alternatively, the logic subsystem may include one or more hardware or firmware devices configured to execute hardware or firmware instructions. Processors of the logic subsystem may be single-core or multi-core, and the instructions executed thereon may be configured for sequential, parallel, and/or distributed processing. Individual components of the logic subsystem optionally may be distributed among two or more separate devices, which may be remotely located and/or configured for coordinated processing. Aspects of the logic subsystem may be virtualized and executed by remotely-accessible, networked computing devices configured in a cloud-computing configuration.

Storage subsystem 1104 includes one or more physical devices configured to temporarily and/or permanently hold computer information, such as data and instructions executable by the logic subsystem. When the storage subsystem includes two or more devices, the devices may be collocated and/or remotely located. Storage subsystem 1104 may include volatile, nonvolatile, dynamic, static, read/write, read-only, random-access, sequential-access, location-addressable, file-addressable, and/or content-addressable devices. Storage subsystem 1104 may include removable and/or built-in devices. When the logic subsystem executes instructions, the state of storage subsystem 1104 may be transformed - e.g., to hold different data.

Aspects of logic subsystem 1102 and storage subsystem 1104 may be integrated together into one or more hardware-logic components. Such hardware-logic components may include program- and application-specific integrated circuits (PASIC / ASICs), program- and application-specific standard products (PSSP / ASSPs), system-on-a-chip (SOC), and complex programmable logic devices (CPLDs), for example.

The logic subsystem and the storage subsystem may cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine may be instantiated by a single computing device, or a machine may include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality may optionally be saved as one or more unexecuted modules on one or more suitable storage devices.

When included, display subsystem 1106 may be used to present a visual representation of data held by storage subsystem 1104. This visual representation may take the form of a graphical user interface (GUI). Display subsystem 1106 may include one or more display devices utilizing virtually any type of technology. In some implementations, display subsystem may include one or more virtual-, augmented-, or mixed reality displays.

When included, input subsystem 1108 may comprise or interface with one or more input devices. An input device may include a sensor device or a user input device. Examples of user input devices include a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 1110 may be configured to communicatively couple computing system 1100 with one or more other computing devices. Communication subsystem 1110 may include wired and/or wireless communication devices compatible with one or more different communication protocols. The communication subsystem may be configured for communication via personal-, local- and/or wide-area networks.

This disclosure is presented by way of example and with reference to the associated drawing figures. Components, process steps, and other elements that may be substantially the same in one or more of the figures are identified coordinately and are described with minimal repetition. It will be noted, however, that elements identified coordinately may also differ to some degree. It will be further noted that some figures may be schematic and not drawn to scale. The various drawing scales, aspect ratios, and numbers of components shown in the figures may be purposely distorted to make certain features or relationships easier to see.

Further, the disclosure comprises configurations according to the following examples.

Example 1. A method for digital image display comprising: at a computing device, receiving an enhanced two-dimensional (2D) image comprising an image dataset derived from a digital object representation, the digital object representation including spatial data representing a three-dimensional (3D) model of an object; displaying a two-dimensional (2D) display image included in the image dataset, the 2D display image depicting the object from a virtual camera location; receiving user input directed at a selected pixel in the 2D display image having image-space coordinates within the 2D display image; based at least in part on the image-space coordinates of the selected pixel, a depth value for the selected pixel, a model view transformation matrix, and a projection matrix included in the image dataset, calculating 3D object-space coordinates of a selected point on the object corresponding to the selected pixel; and displaying the 3D object-space coordinates of the selected point.

Example 2. The method of example 1, wherein the image dataset includes a depth map having a plurality of depth values corresponding to a plurality of pixels in the 2D display image.

Example 3. The method of example 1, further comprising receiving second user input directed at a second selected pixel in the 2D display image, calculating second 3D object-space coordinates of a second selected point on the object corresponding to the second selected pixel, and displaying the second 3D object-space coordinates of the second selected point.

Example 4. The method of example 3, further comprising calculating a 3D object-space distance between the selected point and the second selected point, and displaying the 3D object-space distance.

Example 5. The method of example 1, wherein the object includes two or more subcomponents, and wherein the image dataset further comprises a component identity map useable to resolve each pixel of the 2D display image to a specific subcomponent of the object.

Example 6. The method of example 5, further comprising determining, based on the component identity map, a selected subcomponent of the two or more subcomponents that is represented by the selected pixel, and displaying a corresponding identifier of the selected subcomponent.

Example 7. The method of example 6, further comprising, after determining the selected subcomponent, changing color values of each pixel in the 2D display image depicting the selected subcomponent to highlight the selected subcomponent within the 2D display image.

Example 8. The method of example 1, wherein the image dataset further includes a second model view transformation matrix corresponding to a second coordinate system, and wherein the method further comprises calculating second 3D coordinates of the selected point on the object relative to the second coordinate system based on the second model view transformation matrix.

Example 9. The method of example 1, further comprising displaying text metadata associated with the object.

Example 10. The method of example 1, wherein the computing device is a client computing device, and wherein the enhanced 2D image comprising the image dataset is received from a server computing device via a computer network.

Example 11. The method of example 10, wherein the 2D display image is displayed by a web browser application of the computing device.

Example 12. The method of example 1, wherein the object represents an aircraft part, and wherein the method further comprises, after receiving the user input directed at the selected pixel, displaying part-specific information relating to the aircraft part, including a part identifier.

Example 13. A method for enhanced two-dimensional (2D) image creation, comprising: receiving a digital object representation that includes spatial data representing a three-dimensional (3D) model of an object; rendering a 2D display image of the digital object representation from a virtual camera location; generating a depth map including a plurality of depth values corresponding to a plurality of pixels in the 2D display image; and generating an enhanced 2D image comprising an image dataset for the digital object representation, the image dataset including the 2D display image, the depth map, a model view transformation matrix, and a projection matrix associated with the virtual camera location.

Example 14. The method of example 13, wherein the object includes two or more subcomponents, and wherein the method further comprises generating a component identity map useable to resolve each pixel of the 2D display image to a specific subcomponent of the object.

Example 15. The method of example 14, wherein the component identity map is generated by generating a second 2D image in which individual subcomponents are assigned different unique colors, and then rendered with only ambient lighting enabled.

Example 16. The method of example 13, wherein the image dataset further includes a second model view transformation matrix corresponding to a second coordinate system.

Example 17. The method of example 13, wherein the image dataset further includes text metadata corresponding to the object.

Example 18. The method of example 17, wherein the text metadata includes a hyperlink.

Example 19. A computing system comprising: a logic subsystem; and a storage subsystem holding instructions executable by the logic subsystem to: receive an enhanced 2D image comprising an image dataset derived from a digital object representation, the digital object representation including spatial data representing a three-dimensional (3D) model of an object; display a 2D display image included in the image dataset via a computer display, the 2D display image depicting the object from a virtual camera location; receive user input directed at a selected pixel in the 2D display image having image-space coordinates within the 2D display image; based at least in part on the image-space coordinates of the selected pixel, a depth value for the selected pixel included in a depth map of the image dataset, a model view transformation matrix, and a projection matrix included in the image dataset, calculate 3D object-space coordinates of a selected point on the object corresponding to the selected pixel; and display the 3D object-space coordinates of the selected point via the computer display.

Example 20. The computing system of example 19, wherein the object includes two or more subcomponents, and wherein the image dataset further comprises a component identity map useable to resolve each pixel of the 2D display image to a specific subcomponent of the object.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method (400) for digital image display, the method (400) comprising:
at a computing device (506), receiving (402) an enhanced two-dimensional (2D) image comprising an image dataset (502) derived from a digital object representation (300), the digital object representation (300) including spatial data (302) representing a three-dimensional (3D) model of an object (102);
displaying (404) a two-dimensional (2D) display image (510) included in the image dataset (502), the 2D display image (510) depicting the object (102) from a virtual camera location;
receiving (406) user input (602) directed at a selected pixel in the 2D display image (510) having image-space coordinates (620) within the 2D display image (510);
based at least in part on the image-space coordinates (620) of the selected pixel, a depth value (316) for the selected pixel, a model view transformation matrix (318), and a projection matrix (326) included in the image dataset (502), calculating (408) 3D object-space coordinates (612) of a selected point on the object (102) corresponding to the selected pixel; and
displaying (410) the 3D object-space coordinates (612) of the selected point.

2. The method (400) of claim 1, wherein the image dataset (502) includes a depth map (314) having a plurality of depth values (316) corresponding to a plurality of pixels (310) in the 2D display image (308).

3. The method (400) of one of claims 1 - 2, further comprising receiving second user input (802B) directed at a second selected pixel in the 2D display image (800), calculating second 3D object-space coordinates (804) of a second selected point on the object (102) corresponding to the second selected pixel, and displaying the second 3D object-space coordinates (804) of the second selected point.

4. The method (400) of claim 3, further comprising calculating a 3D object-space distance (808) between the selected point (802A) and the second selected point (802B), and displaying the 3D object-space distance (808).

5. The method (400) of one of claims 1 - 4, wherein the object (102) includes two or more subcomponents (106A, 106B), and wherein the image dataset (502) further comprises a component identity map (320) useable to resolve each pixel of the 2D display image (308) to a specific subcomponent (106) of the object (102).

6. The method (400) of claim 5, further comprising determining, based on the component identity map (320), a selected subcomponent of the two or more subcomponents (106) that is represented by the selected pixel, and displaying a corresponding identifier (627) of the selected subcomponent.

7. The method (400) of claim 6, further comprising, after determining the selected subcomponent (106), changing color values of each pixel in the 2D display image (308) depicting the selected subcomponent to highlight the selected subcomponent (106) within the 2D display image (308).

8. The method (400) of one of claims 1 - 7, wherein the image dataset (502) further includes a second model view transformation matrix (916) corresponding to a second coordinate system, and wherein the method further comprises calculating second 3D coordinates of the selected point on the object (102) relative to the second coordinate system based on the second model view transformation matrix (916).

9. The method (400) of one of claims 1 - 8, further comprising displaying text metadata (628) associated with the object (102).

10. The method (400) of one of claims 1 - 9, wherein the computing device (506) is a client computing device, and wherein the enhanced 2D image comprising the image dataset (502) is received from a server computing device (500) via a computer network (504).

11. The method (400) of claim 10, wherein the 2D display image (510) is displayed by a web browser application (508) of the computing device (506).

12. The method (400) of one of claims 1 - 11, wherein the object (102) represents an aircraft part, and wherein the method further comprises, after receiving the user input (602) directed at the selected pixel, displaying part-specific information (626) relating to the aircraft part, including a part identifier (627).

13. A computing system (1100), comprising:
a logic subsystem (1102); and
a storage subsystem (1104) holding instructions executable by the logic subsystem (1102) to:
receive an enhanced 2D image comprising an image dataset (312) derived from a digital object representation (300), the digital object representation (300) including spatial data (302) representing a three-dimensional (3D) model of an object (102);
display a 2D display image (308) included in the image dataset (312) via a computer display (1106), the 2D display image (308) depicting the object (102) from a virtual camera location;
receive user input (602) directed at a selected pixel in the 2D display image (308) having image-space coordinates (620) within the 2D display image (308);
based at least in part on the image-space coordinates (620) of the selected pixel, a depth value (316) for the selected pixel included in a depth map (314) of the image dataset (312), a model view transformation matrix (318), and a projection matrix (326) included in the image dataset (312), calculate 3D object-space coordinates (622) of a selected point on the object (102) corresponding to the selected pixel; and
display the 3D object-space coordinates (622) of the selected point via the computer display (1106).

14. The computing system of claim 13, wherein the object (102) includes two or more subcomponents (106), and wherein the image dataset (312) further comprises a component identity map (320) useable to resolve each pixel (310) of the 2D display image (308) to a specific subcomponent (106) of the object (102).

15. The computing device of claim 13, wherein the instructions executable by the logic subsystem (1102) are further to perform a method of one of claims 2 - 4 or one of claims 6 - 12.
